(19) Europäisches Patentamt
European Patent Office
Office européen des brevets

(11) **EP 4 166 275 B1**

(12) **EUROPEAN PATENT SPECIFICATION**

(45) Date of publication and mention
of the grant of the patent:
**16.10.2024 Bulletin 2024/42**

(21) Application number: **21306457.9**

(22) Date of filing: **18.10.2021**

(51) International Patent Classification (IPC):
**G01B 5/20** (2006.01)   **B24B 9/14** (2006.01)

(52) Cooperative Patent Classification (CPC):
**B24B 9/148; B24B 9/144; G01B 5/20**

(54) **METHOD FOR DETERMINING THE SHAPE OF AN EYEGLASS FRAME RIM BEZEL**

VERFAHREN ZUR BESTIMMUNG DER FORM EINER BRILLENGESTELLLÜNETTE

PROCÉDÉ DE DÉTERMINATION DE LA FORME D'UNE BORDURE DE MONTURE DE LUNETTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2023 Bulletin 2023/16**

(73) Proprietor: **Essilor International
94220 Charenton-le-Pont (FR)**

(72) Inventors:
• **AMEURLAIN, Hugues
92160 Antony (FR)**

• **ROUSSEL, Laurent
93320 Les Pavillons sous Bois (FR)**
• **JACQ, Francis
44800 Saint-Herblain (FR)**

(74) Representative: **Jacobacci Coralis Harle
32, rue de l'Arcade
75008 Paris (FR)**

(56) References cited:
**US-A1- 2010 112 908     US-B2- 8 132 909**

## Description

TECHNICAL FIELD OF THE INVENTION

The present invention relates in general to the field of eyeglass manufacture, and more precisely to machining ophthalmic lenses.

It relates more particularly to a method for determining the shape of a bezel of an eyeglass frame rim, this operation being the prerequisite for edging a lens to be mounted in said rim.

BACKGROUND INFORMATION AND PRIOR ART

The technical part of the work of an optician, which consists in mounting a pair of ophthalmic lenses in a spectacle frame selected by a customer, may be split into four main operations:

- the acquisition of the shape of the bezel in each of the two rims of the eyeglass frame as selected by the future wearer, i.e. acquiring the shape of the grooves running around the insides of the rims of the frame,

- the centering of each ophthalmic lens, which consists in determining the frame of reference of the lens using centering markings provided thereon, then in suitably positioning the outline of the rim acquired beforehand in the frame of reference of the lens so that, once edged to this outline then mounted in its frame, the lens is correctly positioned with respect to the corresponding eye of the customer and fulfils as best as possible the optical function for which it was designed,

- the blocking of each lens, which consists in attaching a blocking accessory to the lens, so that the lens can be easily extracted from the centering station and then be engaged in the edging station without loss of frame of reference, then

- the edging of each lens, which consists in machining this lens to the outline centered beforehand.

Here, the acquisition operation is more particularly of interest.

This operation is usually carried out by an optician by means of a reader appliance.

Such a reader appliance usually includes a frame blocking support, a feeler that is movable relative to the support, and an electronic and/or computer unit for controlling the position of the feeler relative to the support. The electronic and/or computer unit is thus adapted to acquire the coordinates of a plurality of points that are felt around the bezel of each rim of the frame, and then to deduce therefrom a control setpoint for the machining tool.

It is also known from the art (see for instance document FR2751433) to use an optimized reader appliance able to measure the shape of a cross-section of the bezel. Such a measure is useful to make around the lens a bevel suitable to be inserted in the rim bevel.

This measure is usually performed at the bottom of the rim because the cross-section of the bevel is easier to feel in this area.

Nevertheless, such a reading operation is not accurate enough to make a perfect lens bevel, which runs the risk of leaving problems of mechanical interference between the lens and the frame. US 2010/112908 A1 and US 8 132 909 B2 disclose a processes for machining a lens and a method of preparing an ophthalmic lens respectively.

SUMMARY OF THE INVENTION

In this context, the present invention provides a method for determining the shape of a bezel of an eyeglass frame rim, as defined in independent claim 1. Preferred embodiments are defined in the dependent claims.

Thanks to the invention, it is possible, by using a simple feeler device, to determine a better approximation of the 3D-shape of the bezel, by reading the shape of at least the cross-section that is considered as the most characteristic of the bezel shape.

Preferably, at least two cross-sections are read.

For instance, the invention enables the user of the shaper device to measure or to approximate the differences in height between the front and rear sides of the bezel at a small number of cross-sections of each rim, so that the engagement bevel can be machined as a function of those height differences.

This operation can be performed without special tooling and without requiring much time.

The measurements taken are then input to the shaper device so that it machines the lens bevel with a profile that is not uniform, making it possible to avoid problems of mechanical interference between the lens and the frame.

More precisely, it is generally observed that the difference in height between the front and rear edges of the bezel varies continuously around the rim. This difference in height can therefore easily be approximated in each cross-section of the rim on the basis of measuring the height differences at three distinct sections of the rim or more.

Furthermore, the height difference may be measured between the front and rear edges of the bezel, where the rim forms an obstacle (temple, bridge, nose pad). Consequently, because these obstacles often deform the rims, the presence of the obstacle has an effect on the measured height difference. Therefore, by taking this difference into account during the machining of the lens, it is potentially possible to reduce the risk of interference between the lens and the obstacle. This is particularly advantageous since such an interference would deform the frame or create mechanical stress on the lens or even make the mounting of the lens into the rim impossible.

The process makes sure that the processed lens geometry will not create any deformation of the frame front due to interference between the lens and the rear area.

Other preferred features of the invention are the following ones:

- the position of said cross-section is manually pointed out by an operator, by means of a man-machine interface.
- the position of said cross-section is automatically calculated as a function of the shape of said longitudinal contour.
- after the step of calculating or pointing out the orientation of said cross-section, the feeler is automatically moved to directly reach this orientation without sliding along the bezel.
- after the step of calculating or pointing out the orientation of said cross-section, the feeler is automatically moved by sliding along the bezel to reach this orientation.
- said longitudinal contour comprising four angular sectors having equal extension, including an upper angular sector, a bottom angular sector, a nasal angular sector and a temporal angular sector.
- said cross-section is positioned in the nasal or temporal angular sector.
- during the step of calculating or pointing out, the positions of at least two cross-sections of said bezel are calculated or pointed out.
- during the step of feeling, these at least two cross-sections are felt by moving said mobile feeler in the bezel, in two distinct planes.
- the shape of at least one none-felt cross-section of said bezel is calculated as a function of the shape of said felt cross-sections.
- the entire 3D-shape of said bezel is calculated as a function of the shape of said felt cross-sections, for instance by interpolation.
- a single cross-section of said bevel is felt and each cross-section of said bevel is assumed to have the same shape as the said felt cross-section.
- if only a part of said cross-section can be felt by the feeler, the remainder of the shape of said cross-section is calculated as a function of the shape of the felt part.
- the step of acquiring the shape of the longitudinal contour of the bezel and the step of feeling at least a part of said cross-section being performed by means of a reader appliance, between these two steps, the position of the frame in said reader appliance is modified in such a manner that, during the step of feeling said cross-section, the entire cross-section can be felt by the feeler.
- the method comprises a step of storing data relative to the shape of said longitudinal contour and/or to the shape of said cross-section, in a register in which each entry is associated with an eyeglass frame model or category of models.
- said step of acquiring the shape of the longitudinal contour of the bezel is performed during a feeling operation by means of a reader appliance, and wherein said step of feeling at least a part of said cross-section is performed during an operation distinct from said feeling operation.

The invention also concerns a process for machining a lens to be mounted into an eyeglass frame rim, comprising:

- a first operation consisting in performing a method as defined above, by means of a reader appliance,
- a second operation of determining edging parameters as a function of the shapes of the longitudinal outline and of each felt cross-section, and
- a third operation of edging the lens as a function of said edging parameters, by means of an edging machine, so as to form a bevel along at least a part of the contour of said lens,

wherein said edging parameters are such that at least one particular cross-section of the bevel has a shape depending on said bezel felt cross-section.

Preferably, said bevel comprising a front flank and a rear flank, the height of the front flank being different from the height of the rear flank in said particular cross-section, said difference being determined as a function of the shape of the bezel felt cross-section.

Preferably, said edging parameters are such that said particular cross-section of the bevel has a shape depending on one of the following data:

- an angle between a front flank and a rear flank of the bezel at said felt cross-section,
- a depth of the bezel at said felt cross-section,
- a longitudinal position of the bevel at said felt cross-section in the frame thickness,
- a skew angle of the bezel in said felt cross-section (that is to say its inclination), measured for instance relative to a mean plane of the rim.

DETAILED DESCRIPTION OF EXAMPLE(S)

The following description with reference to the accompanying drawings, given by way of non-limiting example makes it clear what the invention consists in and how it can be reduced to practice.

In the accompanying drawings:

- Figure 1 is a perspective view of a rimmed eyeglass frame,
- Figure 2 is a perspective view of a portion of a rim of the Figure 1 eyeglass frame,
- Figure 3 is a perspective view of an ophthalmic lens,
- Figure 4 is a perspective view of a portion of the Figure 3 ophthalmic lens,

- Figure 5 is a perspective view of an appliance for reading the outline of an eyeglass frame rim, shown with the eyeglass frame of Figure 1 installed therein in a first configuration,
- Figure 6 is a detailed view of a part of the appliance of Figure 5, shown with the eyeglass frame of Figure 1 installed in a second configuration,
- Figure 7 is a view of a rim of the Figure 1 eyeglass frame and of four cross-sections of this rim,
- Figure 8 is a view of a cross-section of the rim of the Figure 1 eyeglass frame and of the Figure 3 ophthalmic lens,
- Figure 9 is a view of a feeler engaged into the rim of the Figure 1 eyeglass frame,
- Figure 10 is a view of two outlines felt inside the rim of the Figure 1 eyeglass frame, and
- Figure 11 is a view of a cross-section of the edge of the Figure 3 ophthalmic lens.

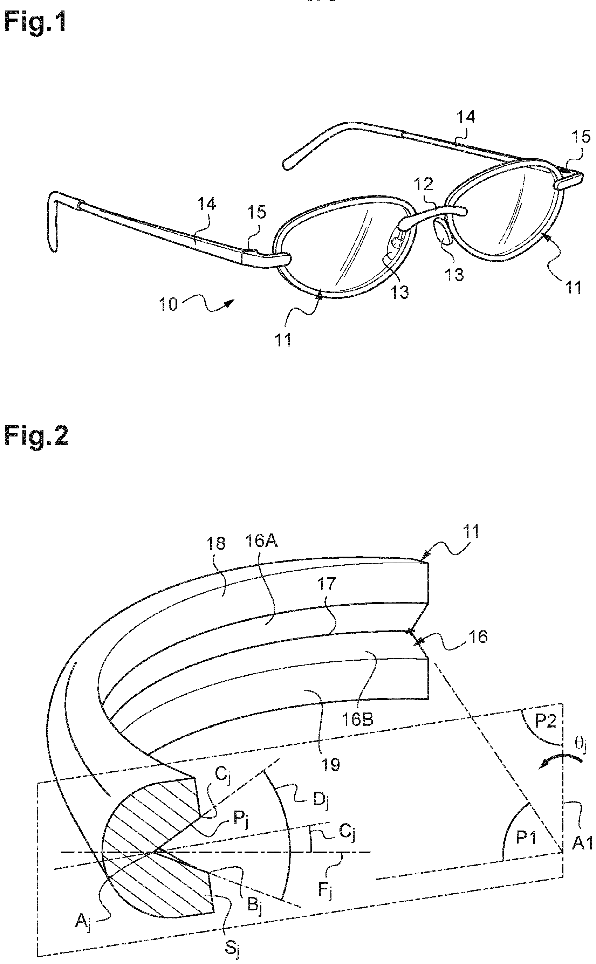

Figure 1 shows a rimmed eyeglass frame 10 having two rims 11 (or surrounds), each serving to receive an ophthalmic lens and to be positioned in front of a respective one of the two eyes of a wearer when said frame is being worn. The two rims 11 are connected together by a bridge 12. They are also each fitted with a nose pad 13 suitable for resting on the wearer's nose and a temple (earpiece) 14 suitable for resting on one of the wearer's ears. Each temple 14 is hinged to the corresponding rim by means of a hinge 15.

As shown in Figure 2, each rim 11 of the eyeglass frame 10 presents an inside face including an inside engagement groove, commonly referred to as a bezel 16. In this embodiment, the bezel 16 presents a V-shaped axial cross-section with front and rear flanks 16A and 16B and a bottom edge 17. It is bordered by front and rear margins 18 and 19. In a variant, the bezel could naturally be of some other shape, for example it could be circularly arcuate.

Relative to each of the rims 11, there is defined a mean plane P1 and a mean axis A1. The mean plane P1 is defined as the plane that comes closest to the set of points making up the bottom edge 17 of the bezel 16. The coordinates of this plane may be obtained, for example, by applying the least squares method to the coordinates of a plurality of points on the bottom of the bezel. The mean axis A1 is defined as being the axis normal to the mean plane P1, passing through the barycenter (center of gravity) of the points making up the bottom edge 17 of the bezel 16.

The cross-section $S_j$ of each rim 11 is defined as being the intersection of the rim 11 with a plane $P2_j$ that contains the mean axis A1 and that presents an angle of orientation $\theta_j$ around said axis.

Each cross-section $S_j$ defines a rim profile $P_j$. Each of these profiles $P_j$ in this embodiment comprises two parallel segments corresponding to the traces of the front and rear margins 18 and 19 in the plane $P2_j$, and two V-shaped segments corresponding to the traces of the front and rear flanks 16A and 16B in the plane $P2_j$.

The rim profiles $P_j$ are of shapes that can vary around the outline of each rim 11.

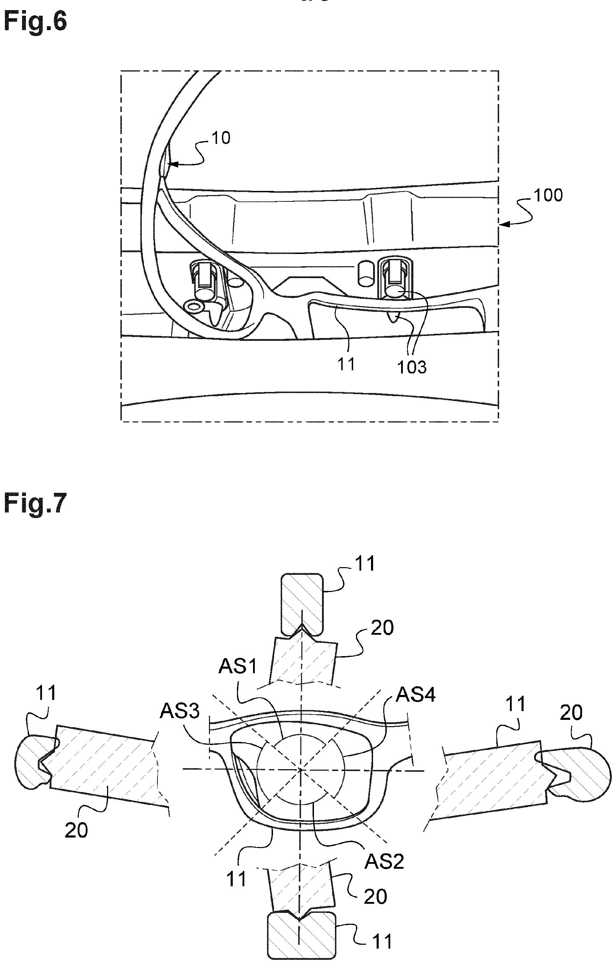

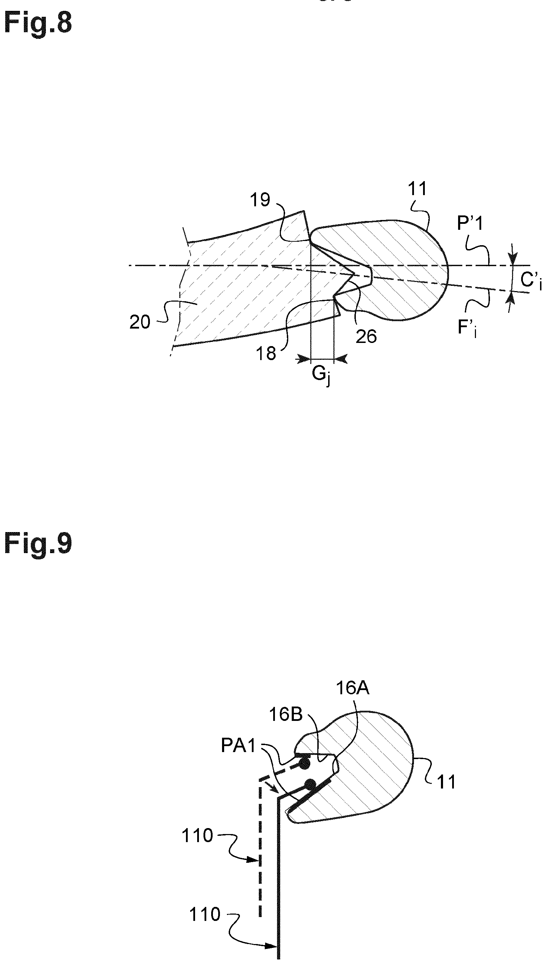

In particular, as shown in Figures 7 and 8, the front and rear margins 18 and 19 present respective first and second distances from the mean axis A1, the difference between these distances referring to as the offset height $G_j$.

This offset height $G_j$ could be defined as the difference between firstly the maximum distance to the mean axis A1 of the trace of the front margin 18 in the cross-section $S_j$ under consideration, and secondly the maximum distance to the mean axis A1 of the trace of the rear margin 19 in said cross-section $S_j$.

But here, this offset height $G_j$ is preferably measured not radially relative to the mean axis A1, but along the bisector direction $F_j$. Indeed, the front lens curvature shall be approximately equal to the frame curvature (that is to say parallel to the bisector direction $F_j$).

Because the nose pads 13 and the hinges 15 are fastened to the rear margins 19, their presence may have an influence on the shape of this margin. Therefore, it can be understood that the nose pads 13 and the hinges 15 can have an influence on the offset height $G_j$. As shown in Figure 2, the opening angle $D_j$ of the bezel 16 in each cross-section $S_j$ is defined as the angle between the traces of the front and rear flanks 16A and 16B.

The eyeglass frame 10 can also be cambered. The bezels 16 are thus skewed, i.e. twisted. Consequently, and as shown in Figure 2, each cross-section $S_j$ of the bezel 16 presents its own angle of inclination. This angle of inclination, which varies along the bezels 16, is quantified in each cross-section $S_j$ in terms of an angle $C_j$ referred to the skew angle. The skew angle $C_j$ corresponds to the angle between the bisector $F_j$ of the bezel 16 and an axis perpendicular to the mean axis A1 in the mean plane P1 of the rim 11.

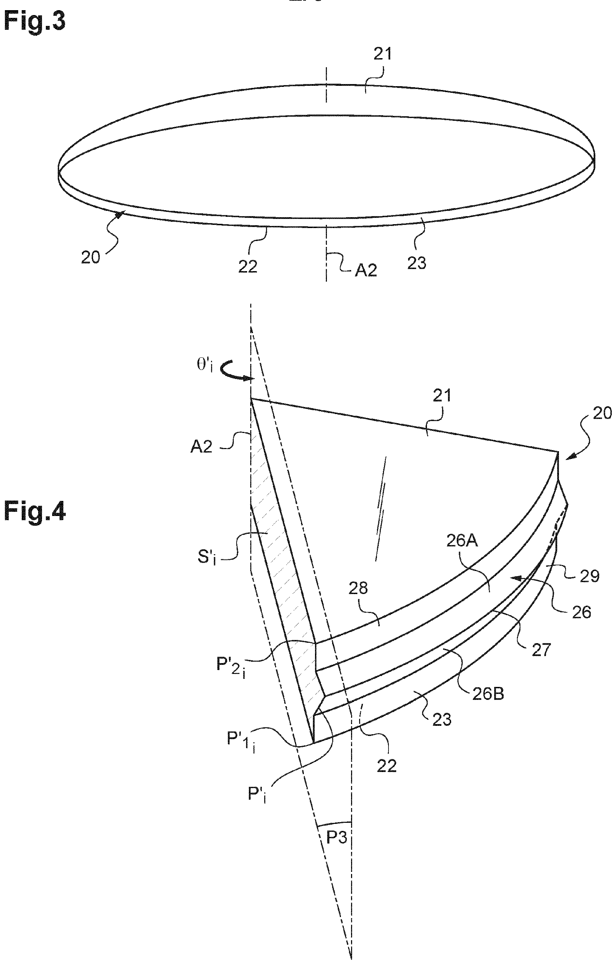

As shown in Figures 3 and 4, the ophthalmic lens 20 presents front and rear optical faces 21 and 22, together with an edge face 23.

The ophthalmic lens 20 presents optical characteristics and geometrical characteristics.

Amongst its optical characteristics, there is defined in particular the spherical refringent power of the lens, which is the magnitude that characterizes and quantifies the "magnifying glass" effect of the lens on the beam under consideration. The point of the lens where the magnifying glass effect is zero (i.e. for a lens that has spherical optical power only, the point where the incident ray and the transmitted ray have the same axis) is referred to as the optical center.

The edge face 23 of the lens initially presents an outline that is circular (Figure 3). Nevertheless, the lens is designed to be shaped to match the shape of the corresponding rim of the eyeglass frame 10, so as to enable it to be engaged therein.

As shown in Figure 4, the lens is more precisely designed to be shaped so as to present on its edge face 23 an engagement ridge 26 (or bevel) bordered by front and rear margins 28 and 29. The engagement ridge 26 described herein presents a V-shaped section with a top edge 27 that runs along the edge face 23 of the lens, with front and rear flanks 26A and 26B on either side of the top edge 27.

In a variant, the edge face of the ophthalmic lens could be shaped so as to present a profile of some other shape.

As for the rim 11, a mean plane and a mean axis A2 can be defined for the lens. The mean plane can be defined as the plane orthogonal to the optical axis of the lens. The mean axis A2 can be defined as being the axis normal to this mean plane, passing through the barycenter of the points making up the top edge 27 of the bevel 26.

The axial section $S'_i$ of the ophthalmic lens 20 is defined as the intersection of said lens with a half-plane P3 that is defined by the optical axis A2 and that presents an angle of orientation $\theta'_i$ about said axis.

Each axial section $S'_i$ of the ophthalmic lens 20 defines a lens profile $P'_i$. Each of these profiles $P'_i$ in this example comprises two parallel segments corresponding to the traces of the front and rear margins 28 and 29 in the half-plane P3, and two segments in a V-shape corresponding to the traces of the front and rear flanks 26A and 26B in the half-plane P3.

In the following, an axial section $S'_i$ of the lens 20 and a cross-sections $S_j$ of the frame 10 will be said to "correspond" when the angular positions thereof $\theta'_i$ and $\theta_j$ are equal.

In order to implement the method of the invention, it is required to make use of a shape reader appliance. This shape reader appliance comprises means that are well known to the person skilled in the art and it does not specifically form the subject matter of the invention described. For example, it is possible to use a shape reader appliance as described in patent EP 0 750 172.

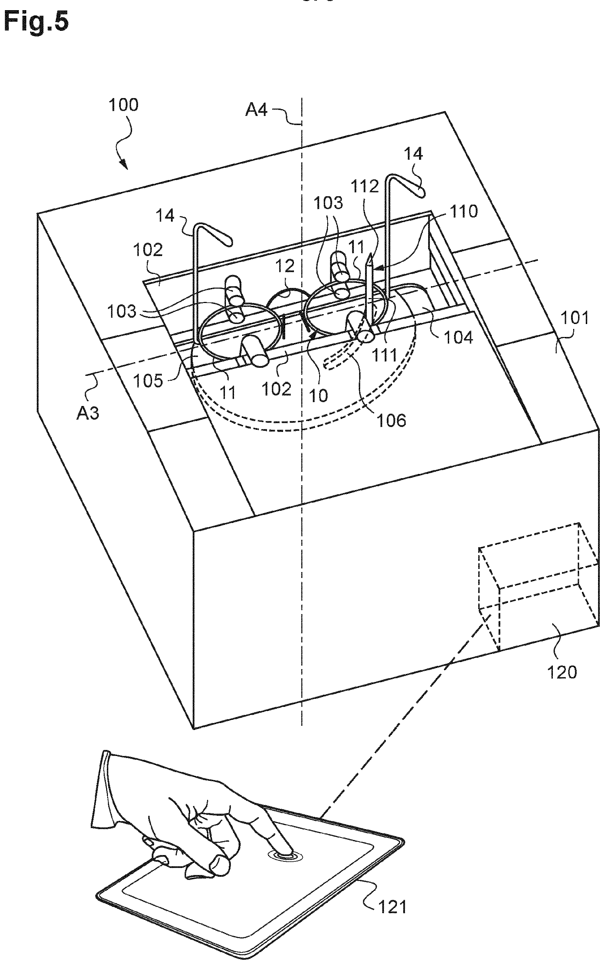

Figure 5 is a general view of the shape reader appliance 100, as it is presented to its user. The appliance has a top cover 101 covering all of the appliance with the exception of a central top portion in which an eyeglass frame 10 is placed.

The shape reader appliance 100 principally serves to read the shape of the bottom edge of the bezel in each rim 11 of the eyeglass frame 10.

The reader appliance 100 shown in Figure 5 has a set of two jaws 102 with at least one of the jaws 102 being movable relative to the other so that the jaws 102 can be moved towards each other or away from each other in order to form a clamping device. Each of the jaws 102 is also provided with two clamps, each made up of two studs 103 that are movable so as to be capable of clamping the eyeglass frame 10 between them in order to prevent it from moving.

In the space left visible by the central top opening of the cover 101, there can be seen a structure 104. A plate (not visible) can be moved in translation on the structure 104 along a transfer axis A3. A turntable 105 is pivotally mounted on the plate. The turntable 105 is thus suitable for occupying two positions along the transfer axis A3, namely a first position in which the center of the turntable 105 is disposed between the two pairs of studs 103 holding the right rim of the eyeglass frame 10, and a second position in which the center of the turntable 105 is placed between the two pairs of studs 103 holding the left rim of the eyeglass frame 10.

The turntable 105 possesses an axis of rotation A4 defined as being the axis normal to the front face of the turntable 105 and passing through its center. It is adapted to pivot about said axis relative to the plate. The turntable 105 also has a circularly arcuate oblong slot 106 through which can move a feeler 110. The feeler 110 comprises a support rod 111 of axis perpendicular to the plane of the front face of the turntable 105, and at its free end a feeler finger 112 of axis perpendicular to the support rod 111. The feeler finger 112 is designed to follow the bottom edge of the bezel of each rim 11 of the eyeglass frame 10 by sliding, or possibly by rolling, therealong.

The shape reader appliance 100 includes actuator means (not shown) adapted firstly to cause the support rod 111 to slide along the slot 106 so as to modify its radial position relative to the axis of rotation A4 of the turntable 105, secondly so as to vary the angular position of the turntable 105 about its axis of rotation A4, and thirdly to position the feeler finger 112 of the feeler 110 at a higher or lower altitude relative to the plane of the front face of the turntable 105.

To summarize, the feeler 110 is provided with three degrees of freedom, namely a first degree of freedom R constituted by the ability of the feeler 110 to move radially relative to the axis of rotation A4 because of its freedom to move along the circular arc formed by the slot 106, a second degree of freedom $\theta$ constituted by the ability of the feeler 110 to pivot about the axis of rotation A4 by virtue of the turntable 105 rotating relative to the plate, and a third degree of freedom Z constituted by the ability of the feeler 110 to move in translation along an axis parallel to the axis of rotation A4 of the turntable 105.

Each point read by the end of the feeler finger 112 of the feeler 110 is identified in a corresponding coordinate system $R_j$, $\theta_j$, $Z_j$.

The shape reader appliance 100 also includes an electronic and/or computer device 120 serving firstly to control the actuator means of the shape reader appliance 100, and secondly to acquire and store the coordinates of the end of the feeler finger 112 of the feeler 110.

This electronic and/or computer device 120 is connected to a man-machine interface, that can be for instance a touch screen 121.

During a first operation, the user proceeds with reading one rim 11 of the eyeglass frame 10, using a reader appliance such as that shown in Figure 5 (the reading of the other rim being carried out in the same way, it will not be described).

Initially, the eyeglass frame 10 is inserted between the studs 103 of the jaws 102 of the reader appliance 100 so that each of its rims 11 is ready for feeling along a path that begins with the feeler 110 being inserted in an initial position along the left rim 11 of the frame, and then passing along the bezel 16 of the rim 11 so as to cover the entire circumference of the rim 11. The initial position corresponds to a point situated between the two studs that maintain the bottom part of the rim.

In this initial position, the electronic and/or computer device 120 defines the orientation $\theta_j$ and the altitude $Z_j$ of the end of the feeler finger 112 of the feeler 110 as being equal to zero.

Thereafter, the actuator means cause the turntable 105 to pivot. While it is pivoting, the actuator means impart a constant radial force on the feeler 110 urging it towards the bezel 16 so that the feeler finger 112 of the feeler 110 slides along the bottom edge 17 of the bezel 16 without rising up either of the front and rear flanks 16A and 16B of the bezel 16.

While the turntable 105 is turning, the electronic and/or computer device 120 reads the three-dimensional coordinates $R_j$, $\theta_j$, $Z_j$ of a plurality of points along the bottom edge 17 of the bezel 16 (e.g. 360 points that are angularly spaced apart at one degree intervals). Each point corresponds to substantially the trace of the bottom edge 17 of the bezel in a cross-section $S_j$.

After the turntable 105 has performed one complete revolution, the actuator means stop rotation thereof. In this position, the feeler 100 is positioned between the two studs that maintain the bottom part of the rim.

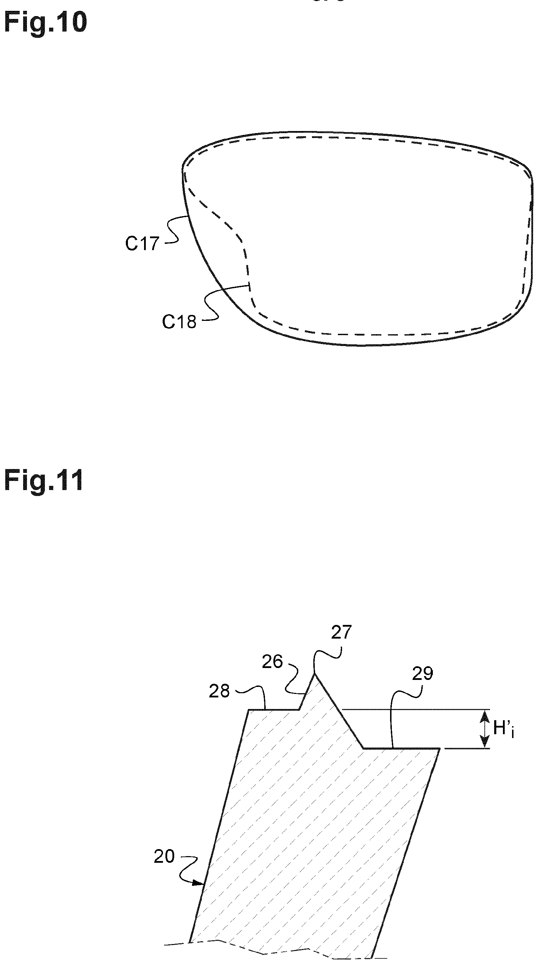

The three-dimensional coordinates $R_j$, $TETA_j$, $Z_j$ of the 360 felt points are considered as characterizing the contour C17 of the bottom edge 17 of the bezel 16 (shown in Figure 10).

During a second operation, the user proceeds with reading at least one cross-section $S_j$ of the rim 11 of the eyeglass frame 10, using the reader appliance 100.

To this end, the orientation $\theta_j$ of each cross-section $S_j$ to be felt is first determined. The process used to determine this orientation will be explained hereinafter.

Then, the feeler 110 is positioned in the bezel 16 of the rim 11, on said cross-section $S_j$ to be felt, against the bottom edge 17 of the bezel 16.

To achieve this, it is possible to make the feeler 110 slides once again along the bottom edge 17 of the bezel 16 until it reaches the determined orientation $\theta_j$ of the cross-section $S_j$.

In a variant, it is possible to make the feeler 110 getting out from the bezel and going directly to the previously felt point that belongs to the cross-section $S_j$ to be felt.

Thereafter, the actuator means cause the feeler 110 to rise up and then go down against the front and rear flanks 16A and 16B of the bezel 16.

While the feeler 110 is moving, the electronic and/or computer device 120 reads the three-dimensional coordinates $R_j$, $\theta_j$, $Z_j$ of a plurality of points along the cross-section $S_j$ of the bezel 16 (e.g. points that are spaced apart at interval of one millimeter). Each point corresponds to substantially the trace of the cross-section $S_j$ of the bezel 16 in the plane $P2_j$.

This operation can be performed by sliding continuously the feeler along the flanks 16A, 16B of the bezel 16. In a variant, it can be performed by making the feeler successively touch several points of these flanks and by getting it away from the bezel between each touch.

This operation can be performed in a single cross-section $S_j$ of the bezel 16 or in several distinct cross-sections $S_j$.

Before feeling each cross-section $S_j$, the orientation(s) $\theta_j$ of the cross-section(s) $S_j$ to be felt has(have) to be determined.

Because the feeling of a cross-section is a long operation, the aim is to read the minimum number of cross-section(s).

To this end, the orientation(s) $B_j$ of the cross-section(s) $S_j$ to be felt is(are) not randomly determined.

In a preferred embodiment, the orientation(s) $\theta_j$ of the cross-section(s) $S_j$ to be felt is(are) not the same on frames of different models. In other words, each orientation is determined as a function of the model of the frame.

Each orientation is determined by the optician or by the electronic and/or computer device 120.

In a first embodiment, the orientation $\theta_j$ of each cross-section $S_j$ to be felt is determined by the optician, by means of the touch screen 121.

To this end, the electronic and/or computer device 120 displays on the touch screen the shape of the contour of the bottom edge 17 of the bezel 16 (previously felt). Then, the optician can touch the screen in an area of this contour to point out the cross-section $S_j$ to be felt.

In a second embodiment, the optician can manually position the feeler 110 in the cross-section $S_j$ to be felt, by making the turntable 105 turn until the good orientation $\theta_j$.

In these embodiments, the optician can select the cross-section $S_j$ on the basis of the shape of the bevel 16. For instance, he can select the areas where a probable interference can occur. In a variant, he can select the areas of the rim where the nose pad and the temple are attached.

In a third embodiment, each orientation $\theta_j$ is calculated by the electronic and/or computer device 120, as a function of the shape of the contour of the bottom edge 17 of the bezel 16.

To this end, as shown in Figure 7, the electronic and/or computer device 120 calculates the position of the center of the contour of the bottom edge 17 of the bezel 16 (called "boxing center") and the position of the horizontal rectangle circumscribed to this contour (called "boxing rectangle").

Considering these boxing center and rectangle, the contour of the bottom edge 17 can be split into four angular sectors AS1, AS2, AS3, AS4 of 90°, namely an upper angular sector AS1, a bottom angular sector AS2, a nasal angular sector AS3 and a temporal angular sector AS4.

Then, the electronic and/or computer device 120 can determine the orientation $\theta_j$ of two cross-sections $S_j$ to be felt, by imposing that these cross-sections are respectively positioned in the nasal angular sector AS3 and in the temporal angular sector AS4.

For instance, a first cross-section can be positioned on the bisector of the nasal angular sector AS3 and the other one can be positioned on the bisector of the temporal angular sector AS4.

Indeed, as shown in Figure 7, the problems of interference between the lens and the frame rim generally occur near these cross-sections. On the contrary, generally, no interference problem occurs in the upper angular sector AS1 and in the bottom angular sector AS2.

In a variant, the orientations $\theta_j$ of the two cross-sections $S_j$ can be determined otherwise. For instance, if the electronic and/or computer device 120 detects that the contour of the bottom edge 17 of the bezel 16 has sensibly a shape of a rectangle, the cross-sections can be selected as belonging to the rays coming from the boxing center and passing through the upper corners of the boxing rectangle. Indeed, the problems of interference generally occur in the areas where the temple and the nose pad are attached, and these areas are usually located near these corners.

As shown in Figure 9, because of the shape of the feeler 110 and of the rim 11, it is sometimes impossible to make the feeler 110 slides along the entire both flanks of the bezel 16.

In such a situation, two solutions are possible in order to obtain the shape of the entire cross-section $S_j$ of the bezel 16.

The first solution consists in making the feeler slide only on the part PA1 of the cross-section Sj that can be felt by the feeler 110.

Then, because it is known that this cross-section is V-shaped, the remainder of the shape of the cross-section Sj can be calculated as a function of the shape of the felt part PA1 (by extending the felt segments to form a V).

The results of this first solution may be less accurate than the ones of the second solution, but they are clearly usable.

As shown in Figure 6, the second solution consists in tilting the frame 10 in the reader appliance 100 in such a manner that the entire cross-section $S_j$ can be felt by the feeler 110.

In the configuration shown in Figure 1, both rims 11 of frame were blocked by two pairs of studs 103, holding the eyeglass frame 10 horizontally in the reader appliance 100. In this new configuration (used when the contour of the bottom edge 17 of the bezel 16 is already felt), the frame is tilted by the optician so that only one of the rims 11 is blocked by the studs 103. In this position, the orientation of the rim 11 makes it possible to feel the entire cross-section $S_j$.

To determine accurately the 3D shape of the bezel 16, a solution would be to feel a great number of cross-sections $S_j$. But as explained above, this operation would take too long to perform.

Consequently, the solution to determine accurately this 3D shape here consists in calculating the shape of none-felt cross-sections as a function of the shape of the felt cross-section(s) $S_j$.

In a first embodiment, knowing only one cross-section, it is possible to consider that that all the cross-sections of the bezel 16 are identical all along the contour C17 of the bottom edge 17 of the bezel 16. Consequently, if only one cross-section $S_j$ of the bevel 16 has been felt, it is assumed that each cross-section of the bezel 16 has the same shape as the one felt.

But, because in practice the cross-sections of the bezel 16 do not have the same shape, the following second embodiment is preferred.

In this second embodiment, a limited number of cross-sections are felt. This number preferably lies between two and six. For instance, four cross-sections positioned on the bisectors of the four angular sector AS1 - AS4 can be felt.

Then, the entire 3D-shape of the bezel 16 is calculated as a function of the shape of these felt cross-sections Sj, for instance by interpolation. In a preferred embodiment, this interpolation takes into account the shape of the contour of the bottom edge 17 of the bezel 16.

At this step of the description, we can explain how this interpolation is performed.

In the embodiment shown in Figure 2, the bezel is V-shaped, so that three points are needed to define the V in a specific cross section $S_j$:

- a first point $A_j$ located on the bottom edge 17,
- a second point $B_j$ located on the intersection between the rear margin 19 and the rear flank 16B of the bezel 16, and
- a third point $C_j$ point located on the intersection between the front margin 18 and the front flank 16A of the bezel 16.

We note that the $A_j$ points coordinates are known all over the frame contour while the $B_j$ and $C_j$ points coordinates are known only where the cross sections are read.

An unfelt cross section $S_j$ situated between 2 felt cross section $S_1$ and $S_2$ can be interpolated as follow.

To estimate the $B_j$ and $C_j$ points coordinates in the $S_j$ cross-section, we can use the known $A_j$ point coordinates, the coordinates of the points $B_1$ and $C_1$ in the cross-section $S_1$ and the coordinates of the points $B_2$ and $C_2$ in the cross- section $S_2$.

The point $B_j$ is situated on a segment $[B_1', B_2']$ where:

- $B_1'$ is the point the position of which relative to the point $A_j$ is equal to the $B_1$ point position relative to the point $A_1$, and
- $B_2'$ is the point the position of which relative to the point $A_j$ is equal to the $B_2$ point position relative to the point $A_2$.

The position of the point $B_j$ in the segment $[B_1', B_2']$ depends on the comparison of the angular position $\theta_j$ of the cross-section $S_j$ on the rim contour with the angular positions $\theta_1$, $\theta_2$ of the cross-sections $S_1$, $S_2$.

More specifically, the distance between the points $B_1$ and $B_j$ shall be equal to the distance between the points $B_1$ and $B_2$ multiplicated by the term $\alpha$, where:

$$A = |\theta_1 - \theta_j| / |\theta_1 - \theta_2|.$$

The coordinates of the point $C_j$ can be determined in the same way.

At this step, the three-dimensional coordinates $R_j$, $TETA_j$, $Z_j$ of the 360 points felt along the bottom edge 17 of the bezel 16 are known.

The three-dimensional coordinates $R_j$, $TETA_j$, $Z_j$ of several points characterizing the shapes of the flanks of the bezel 16 are also known.

In other words, all the data required to machine the edge the lens 20 to be engaged into the considered rim are obtained.

Consequently, these data can be processed in order to determine edging parameters that the electronic and/or computer device 120 is able to transmit to the shaper appliance.

According to the invention, these edging parameters are calculated such that, once edged, the lens presents a bevel all along its outline and has, in at least one particular cross-section $S'_i$, a shape depending on the shape of at least one of the felt cross-sections $S_j$.

In practice, the edging parameters are calculated in order to define automatically the most adequate geometry for the bevel.

Several embodiments are possible to achieve this goal.

In a first embodiment shown in Figure 8, the edging parameters are determined such that, once machined, the lens bevel 26 is tilted and its inclination varies to remain equal, in each cross-section, to the skew angle $C_j$ of the bezel 16 in the corresponding cross section $S_j$.

More precisely, in this embodiment, each cross-section $S'_i$ of the bevel 26 presents its own angle of inclination $C'_i$. The angle of inclination $C'_i$ corresponds to the angle between the bisector $F'_i$ of the bevel 26 and an axis perpendicular to the mean axis A2 in the mean plane P'1 of the lens 20.

In a second embodiment shown in Figure 11, the edging parameters are determined such that, once machined, the bevel is not tilted but the front and rear margins 28 and 29 are situated at different radial distances from the top edge 27 of the bevel (this radial distance being measured from the mean axis A2 of the lens).

The difference $H'_i$ between these distances in a cross-section $S'_i$ could be equal to the difference between:

- the radial distance, in a corresponding cross-section $S_j$, between the axis A1 and the extremity of the front flank 16A of the bezel 16, and
- the radial distance, in this corresponding cross-section $S_j$, between the axis A1 and the extremity of the rear flank 16B of the bezel 16.

But in a preferred embodiment, this difference $H'_i$ is equal to the difference between two distances measured along the bisector $F'_i$ of the bevel 26.

In other embodiments, and more generally, the edging parameters are such that the shape of the bevel 26 in each cross-section $S'_i$ depends on at least one of the following data:

- the angle $D_j$ between the front flank 16A and the rear flank 16B of the bezel 16 in the corresponding cross-section $S_j$,
- the depth of the bezel 16 in this cross-section $S_j$,
- the position of the bevel 16 in the thickness of the rim (expressed in a percentage, 50% corresponding to a central position of the bezel in the thickness of the rim).
- the skew angle $C_j$.

Once determined, the edging parameters are sent to the edging machine and the lens 20 is machined so has to form the bevel 26. The control setpoint for machining the lens is deduced from all the received edging parameters.

This step consists in machining the edge face 23 of the ophthalmic lens 20 to reduce it to the shape of the corresponding rim 11 of the eyeglass frame 10 in such a manner that once the lens 20 is engaged in its rim 11, its front and rear margins 28 and 29 extend respectively at a substantially constant distance from the front and rear margins 18 and 19 of the left rim 11, all around the outline of the rim.

Consequently, once machined, the lens is ready to be mounted in the corresponding rim 11 of the frame 10.

As explained above, the step of feeling each cross-section of the bezel is time-consuming. Consequently, a solution to reduce the time required to acquire the shapes of these cross-sections is to store the measured data or the edging parameters in a database register.

This register can for instance have a first field to store an identifier of the frame model (or of a category of frame models). This identifier can be formed by the name of this model. The register can also have other fields to store the measured data and/or the edging parameters.

With such a register, when the optician receives the frame, he can search in the database if the frame model is already known in this database.

If no result is found, the process described above is performed.

On the contrary, if a corresponding register is found, the data stored in this registered are read and used to machine the lens. In this case, only the bottom edge 17 of the bevel 16 is read by means of the reading appliance 100, but no cross-section of this bevel is felt.

The present invention is defined by the claims.

For instance, in the above embodiments, the shape of the longitudinal contour of the bezel bottom edge 17 and the shapes of the felt cross-sections $S_j$ are successively read by means of the reader appliance 100. But in a variant, only the reading of the bezel bottom edge 17 can be read first. The shapes of the felt cross-sections can be read latter. For instance, they can be read during the first steps of lens machining, indeed information concerning the cross section may not be needed during these first steps of lens machining. To save time, we can also feel the cross-section during the centering process.

According to the present invention, only a rear part of the cross-sections of the bezel 16 is felt. Indeed, it is rare that an interference problem between the frame and the lens occurs on the front side of the bevel. Such problems often occur on the rear side (see Figure 7). Consequently, to reduce the time required to feel the only a rear part of these cross sections is felt. For instance, this rear part corresponds to the trace of the rear flank 16B of the bezel 16.

According to the present invention, is possible to feel only one point of the rear flank of the bezel. Then, the shape of the trace of this rear flank 16B is assumed to be a segment passing through this point and the bottom edge 17 of the bezel 16.

To feel one point of the rear flank of the bezel in a great number of cross-sections, it is possible to make the feeler slide along this rear flank, by making the turntable turn and by forcing the feeler to remain at a constant distance in altitude Z from the bezel bottom edge 17 (against the rear flank

As shown in Figure 10, thanks to this operation, it is possible to trace in the plane $(R_j, \theta_j)$ the shapes of the contour C17 of the bezel bottom edge 17 and of the outline C18 passing through the points felt on the rear flank 16B of the bezel 16.

**Claims**

1.  Method for determining the shape of a bezel (16) of an eyeglass frame rim (11), said rim (11) comprising a front face and a rear face on the side of which is attached a temple (14), the method comprising:

    - a step of acquiring the shape of a longitudinal contour of the bezel (16), and
    - a step of feeling at least a part of at least one cross-section $(S_j)$ of said bezel (16) by moving a mobile feeler (110) in said bezel (16),
    **characterized in that**, before said step of feeling, said method comprises a step of calculating or pointing out an orientation $(\theta_j)$ of said cross-section $(S_j)$ to be felt along said longitudinal contour, and
    **in that**, during said step of feeling, only a rear part of said cross-section $(S_j)$ is felt, said rear part being closer from the rear face of the rim than the rest of the cross-section $(S_j)$.

2.  Method according to claim 1, wherein the position of said cross-section is manually pointed out by an operator, by means of a man-machine interface (121).

3.  Method according to claim 1, wherein the position of said cross-section $(S_j)$ is automatically calculated as a function of the shape of said longitudinal contour.

4.  Method according to any one of claims 1 to 3, wherein, after the step of calculating or pointing out the orientation $(\theta_j)$ of said cross-section $(S_j)$, the feeler is automatically moved to directly reach this orientation $(\theta_j)$ without sliding along the bezel (16).

5.  Method according to any one of claims 1 to 3, wherein, after the step of calculating or pointing out the orientation $(\theta_j)$ of said cross-section $(S_j)$, the feeler is automatically moved by sliding along the bezel (16) to reach this orientation $(\theta_j)$.

6.  Method according to any one of claims 1 to 5, wherein, said longitudinal contour comprising four angular sectors (AS1, AS2, AS3, AS4) having equal extension, including an upper angular sector, a bottom angular sector, a nasal angular sector and a temporal angular sector, said cross-section $(S_j)$ is positioned in the nasal or temporal angular sector.

7.  Method according to any one of claims 1 to 6, wherein:

    - during the step of calculating or pointing out, the positions of at least two cross-sections $(S_j)$ of said bezel are calculated or pointed out, and
    - during the step of feeling, these at least two cross-sections $(S_j)$ are felt by moving said mobile feeler (110) in the bezel (16), in two distinct planes (P2).

8.  Method according to claim 7, wherein the shape of at least one none-felt cross-section of said bezel (16) is calculated as a function of the shape of said felt cross-sections $(S_j)$.

9. Method according to claim 8, wherein the entire 3D-shape of said bezel (16) is calculated as a function of the shape of said felt cross-sections ($S_j$), for instance by interpolation.

10. Method according to any one of claims 1 to 9, wherein, if only a part (PA1) of said cross-section ($S_j$) can be felt by the feeler (110), the remainder of the shape of said cross-section ($S_j$) is calculated as a function of the shape of the felt part (PA1).

11. Method according to any one of claims 1 to 10, comprising a step of storing data relative to the shape of said longitudinal contour and/or to the shape of said cross-section ($S_j$), in a register in which each entry is associated with an eyeglass frame model or category of models.

12. Method according to any one of claims 1 to 11, wherein, said step of acquiring the shape of the longitudinal contour of the bezel (16) is performed during a feeling operation by means of a reader appliance (100), and wherein said step of feeling at least a part of said cross-section is performed during an operation distinct from said feeling operation.

13. Process for machining a lens (20) to be mounted into an eyeglass frame rim (11), comprising:

    - a first operation consisting in performing a method according to any one of claims 1 to 12, by means of a reader appliance (100),
    - a second operation of determining edging parameters as a function of the shapes of the longitudinal outline and of each felt cross-section ($S_j$), and
    - a third operation of edging the lens (20) as a function of said edging parameters, by means of an edging machine, so as to form a bevel (26) along at least a part of the contour of said lens (20),

    wherein said edging parameters are such that at least one particular cross-section ($S'_i$) of the bevel (26) has a shape depending on said bezel felt cross-section ($S_j$).

14. Process according to claim 13, wherein said edging parameters are such that said particular cross-section ($S'_i$) of the bevel (26) has a shape depending on one of the following data:

    - an angle ($D_j$) between a front flank (16A) and a rear flank (16B) of the bezel (16) at said felt cross-section ($S_j$),
    - a depth of the bezel (16) at said felt cross-section ($S_j$),
    - a longitudinal position ($Z_j$) of the bevel (16) at said felt cross-section ($S_j$) in the frame thickness,
    - a skew angle ($C_j$) of the bezel (16) in said felt cross-section ($S_j$).

**Patentansprüche**

1. . Verfahren zur Bestimmung der Form einer Lünette (16) einer Brillengestellfassung (11), wobei die Fassung (11) eine vordere Fläche und eine hintere Fläche umfasst, an deren Seite ein Bügel (14) befestigt ist, wobei das Verfahren Folgendes umfasst:

    - einen Schritt des Erfassens der Form einer Längskontur der Lünette (16) und
    - einen Schritt des Abtastens mindestens eines Teils mindestens eines Querschnitts (Sj) der Lünette (16) durch Bewegen eines beweglichen Tasters (110) in der Lünette (16),

    **dadurch gekennzeichnet, dass** das Verfahren vor dem Schritt des Abtastens einen Schritt des Berechnens oder Anzeigens einer Ausrichtung ($\theta$j) des entlang der Längskontur abzutastenden Querschnitts (Sj) umfasst, und dass während des Schritts des Abtastens nur ein hinterer Teil des Querschnitts (Sj) abgetastet wird, wobei der hintere Teil näher an der hinteren Fläche der Fassung liegt als der Rest des Querschnitts (Sj).

2. . Verfahren nach Anspruch 1, wobei die Position des Querschnitts durch einen Bediener mittels einer Mensch-Maschine-Schnittstelle (121) manuell angezeigt wird.

3. . Verfahren nach Anspruch 1, wobei die Position des Querschnitts (Sj) automatisch als eine Funktion der Form der Längskontur berechnet wird.

4. . Verfahren nach einem der Ansprüche 1 bis 3, wobei der Taster nach dem Schritt des Berechnens oder Anzeigens der Ausrichtung ($\theta$j) des Querschnitts (Sj) automatisch dahingehend bewegt wird, diese Ausrichtung ($\theta$j) direkt zu erreichen, ohne entlang der Lünette (16) zu gleiten.

5. . Verfahren nach einem der Ansprüche 1 bis 3, wobei der Taster nach dem Schritt des Berechnens oder Anzeigens der Ausrichtung ($\theta$j) des Querschnitts (Sj) durch Gleiten entlang der Lünette (16) zum Erreichen dieser Ausrichtung ($\theta$j) automatisch bewegt wird.

6. . Verfahren nach einem der Ansprüche 1 bis 5, wobei die Längskontur vier Winkelsektoren (AS1, AS2, AS3, AS4) mit gleicher Erstreckung umfasst, darunter einen oberen Winkelsektor, einen unteren Winkelsektor, einen nasalen Winkelsektor und einen temporalen Winkelsektor, und dass der Querschnitt (Sj) in dem nasalen oder temporalen Winkelsektor positioniert ist.

7. . Verfahren nach einem der Ansprüche 1 bis 6, wobei:

> - während des Schritts des Berechnens oder Anzeigens die Positionen von mindestens zwei Querschnitten (Sj) der Lünette berechnet oder angezeigt werden, und
> - während des Schritts des Abtastens diese mindestens zwei Querschnitte (Sj) durch Bewegen des beweglichen Tasters (110) in der Lünette (16) in zwei verschiedenen Ebenen (P2) abgetastet werden.

8. . Verfahren nach Anspruch 7, wobei die Form von mindestens einem nicht abgetasteten Querschnitt der Lünette (16) als Funktion der Form der abgetasteten Querschnitte (Sj) berechnet wird.

9. . Verfahren nach Anspruch 8, wobei die gesamte 3D-Form der Lünette (16) als Funktion der Form der abgetasteten Querschnitte (Sj), zum Beispiel durch Interpolation, berechnet wird.

10. . Verfahren nach einem der Ansprüche 1 bis 9, wobei, wenn nur ein Teil (PA1) des Querschnitts (Sj) durch den Taster (110) abgetastet werden kann, der Rest der Form des Querschnitts (Sj) als Funktion der Form des abgetasteten Teils (PA1) berechnet wird.

11. . Verfahren nach einem der Ansprüche 1 bis 10, umfassend einen Schritt des Speicherns von Daten bezüglich der Form der Längskontur und/oder der Form des Querschnitts (Sj) in einem Register, in dem jeder Eintrag mit einem Brillengestellmodell oder einer Kategorie von Modellen assoziiert ist.

12. . Verfahren nach einem der Ansprüche 1 bis 11, wobei der Schritt des Erfassens der Form der Längskontur der Lünette (16) während eines Abtastvorgangs mittels eines Lesegeräts (100) durchgeführt wird, und wobei der Schritt des Abtastens mindestens eines Teils des Querschnitts während eines von dem Abtastvorgang verschiedenen Vorgangs durchgeführt wird.

13. . Verfahren zur Bearbeitung einer Linse (20) zur Montage in eine Brillengestellfassung (11), umfassend:

> - einen ersten Arbeitsgang, der darin besteht, ein Verfahren nach einem der Ansprüche 1 bis 12 mittels eines Lesegeräts (100) durchzuführen,

- einen zweiten Arbeitsgang, der darin besteht, die Kantenschleifparameter als Funktion der Formen der Längskontur und jedes abgetasteten Querschnitts (Sj) zu bestimmen, und
- einen dritten Arbeitsgang des Kantenschleifens der Linse (20) als Funktion der Kantenschleifparameter mittels einer Kantenschleifmaschine zum Bilden einer Abschrägung (26) entlang mindestens einem Teil der Kontur der Linse (20),

wobei die Kantenschleifparameter derart sind, dass mindestens ein bestimmter Querschnitt (S'i) der Abschrägung (26) eine Form aufweist, die von dem abgetasteten Querschnitt (Sj) der Lünette abhängt.

14. . Verfahren nach Anspruch 13, wobei die Kantenschleifparameter derart sind, dass der bestimmte Querschnitt (S'i) der Abschrägung (26) eine Form aufweist, die von einem der folgenden Daten abhängt:

> - einem Winkel (Dj) zwischen einer vorderen Flanke (16A) und einer hinteren Flanke (16B) der Lünette (16) an dem abgetasteten Querschnitt (Sj),
> - einer Tiefe der Lünette (16) an dem abgetasteten Querschnitt (Sj),
> - einer Längsposition (Zj) der Abschrägung (16) an dem abgetasteten Querschnitt (Sj) in der Gestellstärke,
> - einem Schrägwinkel (Cj) der Lünette in dem abgetasteten Querschnitt (Sj).

## Revendications

1. Procédé de détermination de la forme d'une bordure (16) d'un cercle de verre de lunettes (11), ledit cercle (11) comprenant une face avant et une face arrière sur le côté de laquelle est fixée une branche (14), le procédé comprenant :

> une étape d'acquisition de la forme d'un contour longitudinal de la bordure (16), et
> une étape de palpage d'au moins une partie d'au moins une section transversale ($S_j$) de ladite bordure (16) par le déplacement d'un palpeur mobile (110) dans ladite bordure (16),
> **caractérisé en ce que**, avant ladite étape de palpage, ledit procédé comprend une étape de calcul ou de pointage d'une orientation ($\theta_j$) de ladite section transversale ($S_j$) à palper le long dudit contour longitudinal, et
> **en ce que**, pendant ladite étape de palpage, seule une partie arrière de ladite section transversale ($S_j$) est palpée, ladite partie arrière étant plus proche de la face avant du cercle que le reste de la section transversale (S$_j$) .

**2.** Procédé selon la revendication 1, dans lequel la position de ladite section transversale est pointée manuellement par un opérateur, au moyen d'une interface homme-machine (121).

**3.** Procédé selon la revendication 1, dans lequel la position de ladite section transversale (S$_j$) est calculée automatiquement en fonction de la forme dudit contour longitudinal.

**4.** Procédé selon l'une quelconque des revendications 1 à 3, dans lequel, après l'étape de calcul ou de pointage de l'orientation (θ$_j$) de ladite section transversale (S$_j$), le palpeur est déplacé automatiquement pour atteindre directement cette orientation (θ$_j$) sans coulisser le long de la bordure (16).

**5.** Procédé selon l'une quelconque des revendications 1 à 3, dans lequel, après l'étape de calcul ou de pointage de l'orientation (θ$_j$) de ladite section transversale (S$_j$), le palpeur est déplacé automatiquement par coulissement le long de la bordure (16) pour atteindre cette orientation (θ$_j$).

**6.** Procédé selon l'une quelconque des revendications 1 à 5, dans lequel ledit contour longitudinal comprend quatre secteurs angulaires (AS1, AS2, AS3, AS4) ayant une extension égale, comprenant un secteur angulaire supérieur, un secteur angulaire inférieur, un secteur angulaire nasal et un secteur angulaire temporal, ladite section transversale (S$_j$) est positionnée dans le secteur nasal ou temporal.

**7.** Procédé selon l'une quelconque des revendications 1 à 6, dans lequel :

pendant l'étape de calcul ou de pointage, les positions d'au moins deux sections transversales (S$_j$) de ladite bordure sont calculées ou pointées, et
pendant l'étape de palpage, ces aux moins deux sections transversales (S$_j$) sont palpées par le déplacement dudit palpeur mobile (110) dans la bordure (16), dans deux plans distincts (P2).

**8.** Procédé selon la revendication 7, dans lequel la forme d'au moins une section transversale non palpée de ladite bordure (16) est calculée en fonction de la forme desdites sections transversales palpées (S$_j$).

**9.** Procédé selon la revendication 8, dans lequel la forme complète en 3D de ladite bordure (16) est calculée en fonction de la forme desdites sections transversales palpées (S$_j$), par exemple par interpolation.

**10.** Procédé selon l'une quelconque des revendications 1 à 9, dans lequel, si seule une partie (PA1) de ladite section transversale (S$_j$) peut être palpée par le palpeur (110), le reste de la forme de ladite section transversale (S$_j$) est calculé en fonction de la forme de la partie palpée (PA1).

**11.** Procédé selon l'une quelconque des revendications 1 à 10, comprenant une étape de stockage de données relatives à la forme dudit contour longitudinal et/ou à la forme de ladite section transversale (S$_j$), dans un registre dans lequel chaque entrée est associée à un modèle ou une catégorie de modèles de monture de verre de lunettes.

**12.** Procédé selon l'une quelconque des revendications 1 à 11, dans lequel ladite étape d'acquisition de la forme du contour longitudinal de la bordure (16) est exécutée pendant une opération de palpage au moyen d'un appareil de lecture (100), et dans lequel ladite étape de palpage d'au moins une partie de ladite section transversale est exécutée pendant une opération distincte de ladite opération de palpage.

**13.** Processus d'usinage d'une lentille (20) à monter sur un cercle de verre de lunettes (11), comprenant :

une première opération consistant en l'exécution d'un procédé selon l'une quelconque des revendications 1 à 12, au moyen d'un appareil de lecture (100),
une deuxième opération de détermination de paramètres de taillage en fonction des formes du contour longitudinal et de chaque section transversale (S$_j$), et
une troisième opération de taillage de la lentille (20) en fonction desdits paramètres de taillage, au moyen d'une machine à tailler, de façon à former un biseau (26) le long d'au moins une partie du contour de ladite lentille (20),
dans lequel lesdits paramètres de taillage sont tels qu'au moins une section transversale particulière (S'$_i$) du biseau (26) présente une forme dépendant de ladite section transversale palpée de biseau (S$_j$).

**14.** Processus selon la revendication 13, dans lequel lesdits paramètres de taillage sont tels que ladite section transversale particulière (S'$_i$) du biseau (26) présente une forme dépendant de l'une des données suivantes :

un angle (D$_j$) entre un flanc avant (16A) et un flanc arrière (16B) de la bordure (16) au niveau de ladite section transversale palpée (S$_j$),
une profondeur de la bordure (16) au niveau de ladite section transversale palpée (S$_j$),
une position longitudinale (Z$_j$) de la bordure (16) au niveau de ladite section transversale palpée

(S$_j$) dans l'épaisseur de la monture,
une inclinaison (C$_j$) de la bordure (16) dans ladite section transversale palpée (S$_j$).

# Fig.1

# Fig.2

**Fig.3**

21

20

22

A2

23

**Fig.4**

$\theta'_i$

A2

21

20

$S'_i$

26A

29

28

26

$P'2_i$

27

26B

$P'1_i$

23

22

$P'_i$

P3

# Fig.5

# Fig.6

# Fig.7

## Fig.8

## Fig.9

# Fig.10

C17

C18

# Fig.11

27

26

28

29

$H'_i$

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2751433
- US 2010112908 A1
- US 8132909 B2
- EP 0750172 A